# EUROPEAN PATENT APPLICATION

(11) **EP 4 657 134 A1**
(43) Date of publication of application: **03.12.2025**
(21) Application number: 24178385.1
(22) Date of filing: 28.05.2024
(51) Int. Cl.: G02B 21/33, G02B 21/24, G02B 21/36

(54) **CONTROL DEVICE, MICROSCOPE AND METHOD FOR CONTROLLING A MICROSCOPE**

(71) Applicant: Leica Microsystems CMS GmbH, 35578 Wetzlar (DE)
(72) Inventor: Ritschel, Kai, 35578 Wetzlar (DE); Schacht, Volker, 35578 Wetzlar (DE); Hofmann, Tobias, 35578 Wetzlar (DE); Subotic, Zoran, 35578 Wetzlar (DE)
(74) Representative: Schaumburg und Partner Patentanwälte mbB

(57) **Abstract**

A control device (100) for a microscope (102, 200) comprises a light source (112) configured to generate a measurement light beam (114), and an optical system (110) configured to direct the measurement light beam (114) into a sample space (106) of the microscope (102, 200), and to receive reflection light (116), which comprises light of the measurement light beam (114) reflected in the sample space (106). The control device (100) further comprises a detector (118) configured to detect the intensity of the reflection light (116) received by the optical system (110), and a processor (120) configured to determine whether or not a sample (104, 202) is present in the sample space (106) based on the intensity of the reflection light (116) detected by the detector (118). The processor (120) is further configured to control the microscope (102, 200) to perform or not perform an action based on whether the processor (120) has determined that a sample (104, 202) is present in the sample space (106).

## Description

### Technical field

The invention relates to a control device for a microscope, and to a microscope. The invention further relates to a method for controlling a microscope.

### Background

Many modern microscopes are heavily automated, performing many tasks autonomously without human intervention. To ensure correct operation of a microscope during automated tasks, it is essential to accurately detect the presence of a sample in the sample space of the microscope. If the sample is not or not correctly arranged in the sample space, this can have unwanted negative effects, potentially leading to damage to the microscope and/or the sample. For example, some microscopes are provided with an automatic immersion system for automatically applying an immersion liquid, for example oil or water, between the objective lens and the sample. This enables better quality and resolution without manual interaction. Automatic immersion, especially using water as the immersion liquid, is particularly useful for longer experiments where, without manual interaction, the water could evaporate during the experiment, degrading quality or even ruining the image. However, if the immersion liquid is automatically applied to the sample space without a sample present, the immersion liquid may spill into the microscope.

### Summary

It is an object to provide a control device for a microscope, a microscope, and a method for controlling a microscope that enable a robust and accurate detection of a sample in a sample space of the microscope.

The aforementioned object is achieved by the subject-matter of the independent claims. Advantageous embodiments are defined in the dependent claims and the following description.

The proposed control device for a microscope comprises a light source configured to generate a measurement light beam, and an optical system configured to direct the measurement light beam into a sample space of the microscope, and to receive reflection light, which comprises light of the measurement light beam reflected in the sample space. The control device further comprises a detector configured to detect the intensity of the reflection light received by the optical system, and a processor configured to determine whether or not a sample is present in the sample space based on the intensity of the reflection light detected by the detector. The processor is further configured to control the microscope to perform or not perform an action based on whether the processor has determined that a sample is present in the sample space.

The sample comprises a specimen, such as a biological specimen, and a sample carrier. The sample carrier may be a Petri-dish or slide, for example. Such sample carriers are made from optically transparent materials that allow for the transmission of light in the optical spectrum. However, such materials also reflect a portion of incident light. Other sample carriers, such as microwell plates, may be made from opaque materials, for example plastics. But even these materials reflect at least a portion of the incident light. It has been recognized that light reflected of the sample carrier may be used to determine the presence of a sample in the sample space. The control device comprises the light source to generate the measurement light beam that is directed into the sample space using the optical system. If the measurement light beam is reflected in the sample space, for example by the sample, this reflection light is captured by the optical system and directed onto the detector. Depending on the detected intensity, the processor than determines whether or not a sample is present in the sample space.

Thereby, the proposed control device enables a robust and accurate detection of the sample in the sample space of the microscope.

In an embodiment the processor is configured to control the microscope to perform at least one action only if the processor has determined that a sample is present in the sample space. The at least one action may be one of the following actions: an immersion, an incubation, an illumination, determining a focus map, determining an autofocus curve, and capturing an overview image of the sample. For example, performing automatic immersion involves automatically introducing an immersion liquid into the sample space to form a thin film between the sample and a front surface of an objective lens. When there is no sample in the sample space, this will cause the immersion liquid to spill into the microscope, potentially damaging it. Likewise, starting an illumination using a laser light source may potentially damage the microscope. Therefore, the control device makes a safer operation of the microscope possible. In addition, the controller can make the microscope much easier to use. For example, the processor may control the microscope to output a warning to a user, when an experiment is started by the user, but the processor has determined that no sample is present in the sample space. In another example, the processor controls the microscope to move a microscope stage to a loading position when the processor has determined that no sample is present in the sample space. This enables the user to provide a sample more easily to the microscope. Alternatively, or additionally, the processor may be configured to not perform or to stop any of the aforementioned actions if the processor has determined that no sample is present in the sample space.

In another embodiment the processor is configured to control the light source to generate the measurement light beam. This enables the control device to initiate a detection of the sample in the sample space by controlling the light source to generate the measurement light beam. This allows the control device to operate based on a user input or a predetermined schedule, for example.

In another embodiment the processor is configured to control the light source to generate the measurement light beam at a predetermined interval, and to determine whether or not a sample is present in the sample space based on the reflection light detected by the detector each time. In this embodiment, the detection of the sample in the sample space is repeated based on a predetermined schedule. This enables the device to periodically check whether a sample is present in the sample space and to control the microscope accordingly, thereby ensuring a safe operation of the microscope. For example, an automatic immersion may be stopped immediately once the processor has determined that no sample is present in the sample space.

In another embodiment the processor comprises a memory element and is configured to store the result of each determination together with a time information on the memory element. In this embodiment, a history of past determinations is generated. This history makes it possible to determine if, for example, the sample has been moved since the beginning of an experiment. Based on the history, the processor may control the microscope to perform a number of actions.

The processor may further be configured to control a microscope stage of the microscope to move the sample consecutively to at least to different positions, and to control the light source to generate the measurement light beam and to determine whether or not a sample is present in the sample space based on the reflection light detected by the detector for each of the different positions. This enables the control device to determine whether the sample is present in the sample space for each of the different positions of the sample, and to control the microscope accordingly. For example, the sample may be moved out of the view of the microscope for one of the positions, and consequently not be present in the sample space anymore. The result of the determinations may also be stored on the memory element together with a positional information corresponding to the position of the sample.

In another embodiment the processor is configured to control the microscope to perform at least one action only if the processor has determined that a sample was removed from the sample space and that a sample has been placed in the sample space subsequently. The at least one action may be one of the following actions: output a warning to the user that the sample has been moved, initiate automatic correction of aberrations, redetermine a focus map, redetermine an autofocus curve, and output an information to the user. In this embodiment, the processor determines whether or not the sample has been moved, for example during the course of an experiment. Based on this information, the processor controls the microscope. In an example, the processor controls the microscope to output a warning to the user that the sample has been moved, and that the current ROI will not be identical to the ROI of the original position. In another example, the processor controls the microscope to redetermine the focus map and autofocus curve for the sample, since it must be assumed that the position of the sample is not identical to its original position. This improves the overall handling of the microscope, in particular for inexperienced users. The processor may also control the microscope to perform other actions than the actions listed above. For example, once the processor has determined that the sample was moved, the processor may control an image processing unit of the microscope to create a new project in a data container to avoid a positional mismatch between different recordings of the same sample.

In another embodiment the processor is configured to determine that a sample is present in the sample space if the intensity of the reflection light detected by the detector is greater than a predetermined threshold, and to determine that no sample is present in the sample space if the intensity of the reflection light detected by the detector is less than or equal to a predetermined threshold. Many elements in the sample space may reflect the measurement light beam and create false reflection light. However, this false reflection light is less intense than the actual reflection light generated by the sample. By employing a threshold, the determination whether a sample is present in the sample space can be made even more robust.

In another embodiment the processor is configured to determine that a sample is present in the sample space if the detector detects reflection light, and to determine that no sample is present in the sample space if the detector detects no reflection light. In other words, the predetermined threshold is equal to zero. Once enough reflection light hits the detector to trigger the detector, the processor determines that the sample is present. This makes the processing of the detector signal very simple compared to other solutions. Preferably, in this embodiment, the arrangement of the optical system and the detector is such that only reflection light generated by a sample in the sample space can reach the detector in sufficient quantities to trigger the detector.

In another embodiment the detector is a non-imaging detector. In this embodiment, the detector is a so-called single pixel detector, for example a single photodiode, a photomultiplier tube, or an avalanche photodiode. Such a detector only detects the intensity of the reflection light, but not its spatial distribution. This makes the detector very simple and reliable and reduces the need for additional processing of the detector signal.

In another embodiment the optical system comprises at least one objective of the microscope. Preferably, the optical system comprises the objective currently directed at the sample space. By using the objective already present in the microscope, the need for additional hardware is greatly reduced, thereby reducing the space needed for the device and making it significantly easier to retrofit the control device to an existing microscope or to integrate the control device into a microscope design.

In another embodiment the light source, the optical system, and/or the detector are part of a triangulating autofocus system of the microscope. Most modern microscopes already comprise a triangulating autofocus system. The control device according to this embodiment can be easily retrofitted to an existing microscope.

In another embodiment the processor is configured to control the microscope to move an immersion objective into the optical axis of the microscope only if the processor has determined that a sample is present in the sample space. For example, the processor may control a revolving nosepiece to move the immersion objective into the optical axis of the microscope. In this embodiment, the microscope only performs an objective change to the immersion objective if the processor has determined that a sample is present in the sample space. This can prevent automatic immersion from activating, which can cause damage to the microscope due to spillage.

In another embodiment the processor is configured to determine if an immersion objective is to be moved into the optical axis of the microscope, and to control an output unit to output a warning to a user that no sample is present in the sample space if the processor has determined that no sample is present in the sample space. In this embodiment, the processor determines if an objective change to an immersion objective is immanent, for example when the microscope automatically switches to an imaging mode requiring an immersion objective. When the objective change is immanent, the processor controls the output unit to warn the user, that no sample is present in the sample space. The output unit may be part of the microscope or an independent element. For example, the output unit is a display or a warning light.

In another embodiment the processor is configured to determine if the immersion objective is to be moved into the optical axis of the microscope based on a user input. In this embodiment, the processor determines if an objective change to an immersion objective is immanent based on the user input, for example when the user performs a user input that switches the microscope into an imaging mode requiring an immersion objective.

The invention also relates to a microscope comprising a control device as described above. In particular, the microscope may be a box-type microscope. In such a microscope, the sample is not visible to the user while the microscope is in operation, and the control device can be used advantageously to support the automatic operation of the microscope. The microscope preferably comprises at least one immersion objective, and an automatic immersion system configured to provide an immersion liquid into the sample space. The control device is preferably configured to control the microscope to perform an automatic immersion only if the processor has determined that a sample is present in the sample space. In such an embodiment, the control device realizes a spill protection device. The microscope has the same advantages as the control device described above. In particular, the microscope may be supplemented with the features described in this document in connection with the control device. Furthermore, the control device described above may be supplemented with the features described in this document in connection with the microscope.

The invention further relates to a method for controlling a microscope. The method comprises the following steps: Generating a measurement light beam. Directing the measurement light beam into the sample space. Receiving reflection light, which comprises light of the measurement light beam reflected in the sample space. Detecting the intensity of the reflection light. Determining whether or not a sample is present in the sample space based on the intensity of the detected reflection light. Controlling the microscope to perform or not perform an action based on whether the processor has determined that a sample is present in the sample space.

The method has the same advantages as the control device described above. In particular, the method may be supplemented with the features described in this document in connection with the control device and/or the microscope. Furthermore, the control device and/or the microscope described above may be supplemented with the features described in this document in connection with the method.

### Short Description of the Figures

Hereinafter, specific embodiments are described referring to the drawings, wherein:
- Figure 1: is a schematic view of a control device for a microscope according to an embodiment;
- Figure 2: is a schematic view of a microscope comprising the control device according to an embodiment; and
- Figure 3: is a flowchart of a method for controlling a microscope according to an embodiment.

### Detailed Description

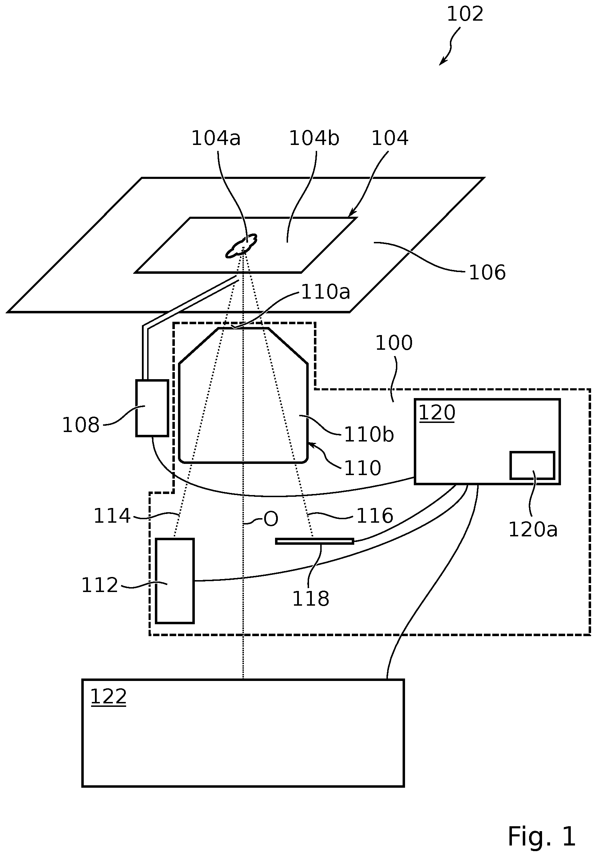

Figure 1 is a schematic view of a control device 100 for a microscope 102 according to an embodiment.

The purpose of the control device 100 is to determine whether or not a sample 104 is present in a sample space 106 of the microscope 102, and to control the microscope 102 accordingly. The control device 100 shown in Figure 1 exemplary controls an automatic immersion system 108 configured to apply an immersion liquid between the sample 104 and a front surface 110a of an objective lens 110b of the microscope 102. The sample 104 is exemplary formed as an arrangement of a specimen 104a and a sample carrier 104b, shown in Figure 1 as a microscope slide.

The control device 100 includes a light source 112 for generating a measurement light beam 114. The light source 112 may comprise a laser, an LED, or another source of light, as well as optical elements required to form the measurement light beam 114, such as lenses and apertures. It is particularly advantageous when the measurement light beam 114 is formed from light outside the optical spectrum, such as infrared light, as not to interfere with observations performed with the microscope 102. In the embodiment shown in Figure 1, the light source 112 is arranged with parallel offset to the optical axis O of the microscope 102, and the generated measurement light beam 114 is directed into the objective lens 110b at an oblique angle of incidence. The objective lens 110b directs the measurement light beam 114 into the sample space 106, i.e. the space immediately above the objective lens 110b. In the sample space 106, the measurement light beam 114 is reflected by the sample carrier 104b back towards the objective lens 110b. The reflected part of the measurement light beam 114 forms reflection light 116 that is collected by the objective lens 110b. The objective lens 110b of the microscope 102 thus forms part of an optical system 110 of the control device 100 that is configured to direct the measurement light beam 114 into the sample space 106, and to receive the reflection light 116 from the sample space 106.

The reflection light 116 collected by the objective lens 110b is directed onto a detector 118 of the control device 100. The detector 118 is configured to detect the intensity of the reflection light 116. For example, the detector 118 may generate a detector signal corresponding to the intensity of the reflection light 116 received on the detector 118. The detector 118 may be a non-imaging detector, a so-called single pixel detector, that only detects the intensity of the reflection light 116, but not the spatial distribution of the reflection light 116. However, the detector 118 may also be configured to detect the spatial distribution of the reflection light 116. In such an embodiment, the spatial distribution of the reflection light 116 may also be used to, for example, determine a distance between the front surface 110a of the objective lens 110b and the sample 104 in a triangulating autofocus system. The detector 118 may output a binary detector signal having a first state corresponding to no reflection light 116 being detected, and a second state corresponding to reflection light 116 being detected. Alternatively, the first state of the detector signal may correspond to the detected intensity of the reflection light 116 being less than a predetermined threshold, and the second state of the detector signal may correspond to the detected intensity of the reflection light 116 being greater or equal than a predetermined threshold. In another alternative the detector 118 may output a multilevel detector signal corresponding to the detected intensity.

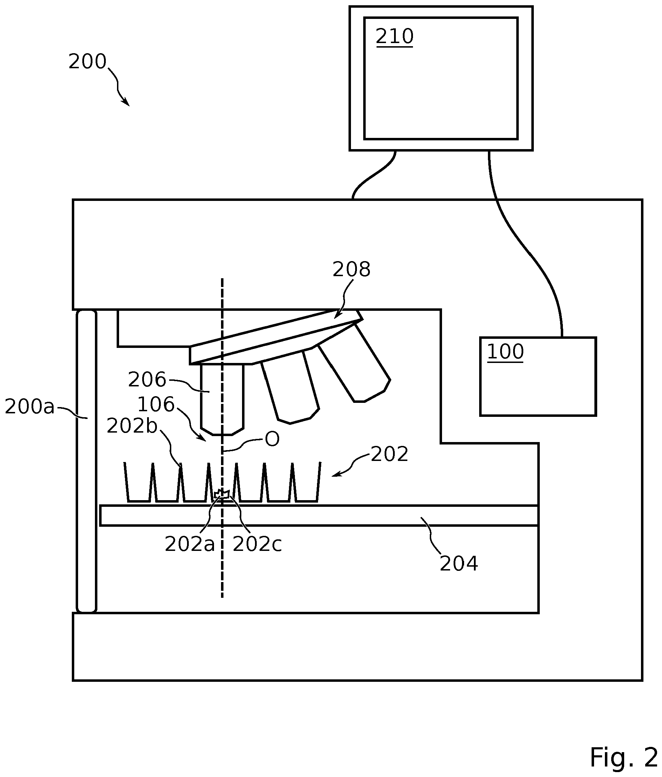

The control device 100 further comprises a processor 120. In the embodiment shown in Figure 1, the processor 120 is connected to the light source 112, the detector 118, and the automatic immersion system 108, and may be connected to further elements of the microscope 102, for example an automated revolving nosepiece 208 (c.f. Figure 2). The further elements are represented in Figure 1 collectively by a block 122. The processor 120 may control any of the aforementioned elements. For example, the processor 120 may be configured to control the light source 112 to emit the measurement light beam 114. In particular, the processor 120 is configured to receive the detector signal from the detector 118 and determine whether or not the sample 104 is present in the sample space 106 based on the detector signal, i.e. the intensity of the reflection light 116 detected by the detector 118.

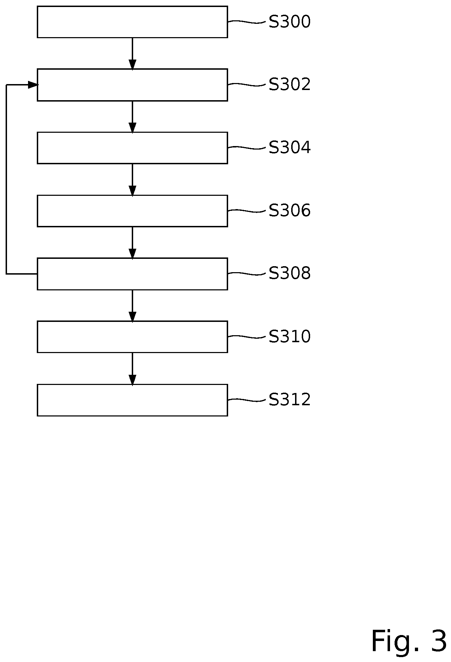

Based on the determination, the processor 120 controls the microscope 102 to perform or not perform an action. For example, the processor 120 may prevent the microscope 102 from operating a laser of the microscope 102 for illumination purposes when the processor 120 has determined that no sample 104 is present in the sample space 106. In Figure 1, the processor 120 comprises a memory element 120a and is configured to store the result of each determination together with a time information on the memory element 120a. This generates a history of determinations based on which the processor 120 may control the microscope 102. For example, the processor 120 may be configured to determine whether the sample 104 has been moved based on the history and, for example, output a warning to a user when the processor 120 has determined that the sample 104 was moved. More detail on the control of the microscope 102 is given below with reference to Figure 3, which details a method for controlling a microscope.

In the embodiment shown in Figure 1, the processor 120 controls the automatic immersion system 108 to perform an automatic immersion and/or to stop an automatic immersion. The automatic immersion system 108 is configured to generate a small film of the immersion liquid between the front surface 110a of the objective lens 110b and the sample carrier 104b, which replaces the air between these two optical surfaces. This enhances the numerical aperture of the objective lens 110b, thereby increasing the resolution and improving image quality by reducing the refractive index mismatch between the objective lens 110b and the sample carrier 104b. Typically, specialized objective lenses 110 called immersion objectives are used for immersion applications. In Figure 1, the objective lens 110b is exemplary formed as such an immersion objective.

Figure 2 is a schematic view of a microscope 200 comprising the control device 100 according to an embodiment. The microscope 200 is exemplary formed as a box-type microscope 200, meaning that the sample space 106 is enclosed and accessible via a door 200a.

In Figure 2, the sample 202 is exemplary shown as an arrangement of a specimen 202a and a multiwell plate 202b comprising multiple wells 202c for arranging specimens therein. The sample 202 is arranged on a microscope stage 204 of the microscope 200. The microscope stage 204 may be moveable and may be controlled by the control device 100 based on whether the processor 120 has determined that a sample 202 is present in the sample space 106.

The microscope 200 exemplary comprises multiple objective lenses 206, at least one of which may be an immersion objective. The different objective lenses 206 may be mounted by a revolving nosepiece 208, for example. The revolving nosepiece 208 is configured to selectively move one of the different objective lenses 206 into the optical axis O of the microscope 200 to enable a microscopic observation using said objective lens 206. In such an embodiment, the optical system 110 of the control device 100 in particular comprises the objective lens 206 currently moved into the optical axis O of the microscope 200.

Figure 2 further shows an output unit 210, which is exemplary formed as a display device connected to the control device 100 and the microscope 200. The control device 100 and the microscope 200 may output information and/or warnings to the user by controlling the output unit 210.

Figure 3 is a flowchart of the method for controlling a microscope 102, 200 according to an embodiment.

The method is performed to determine whether a sample 104, 202 is present in the sample space 106 of the microscope 102, 200 and to control the microscope 102, 200 accordingly. The method may be performed using the control device 100 described above with reference to Figure 1 and/or the microscope 102, 200 described above with reference to Figure 2. The processor 120 of the control device 100 may perform at least some of the method steps described.

The method is started in step S300. In step S302 the measurement light beam 114 is generated. In an example, the processor 120 controls the light source 112 to generate the measurement light beam 114. The measurement light beam 114 is then directed into the sample space 106 of the microscope 102, 200 using the optical system 110 of the control device 100, for example. If a sample 104, 202 is present in the sample space 106, the measurement light beam 114 is at least partially reflected, for example by the sample carrier 104b or the multiwell plate 202b, thereby creating the reflection light 116. In step S304 the reflection light 116 is received, and an intensity of the received reflection light 116 is detected. In an example, the reflection light 116 is received by the optical system 110 of the control device 100, and then directed onto the detector 118 of the control device 100. The detector 118 may generate a detector signal corresponding to the detected intensity for further processing. Additionally, the detector 118 may also detect the spatial distribution of the reflection light 116 on the detector 118 and generate the detector signal to correspond to this information as well.

In step S306 it is determined whether or not a sample 104, 202 is present in the sample space 106 based on at least the detected intensity of the reflection light 116. In an example, the processor 120 receives and processes the detector signal generated by the detector 118 based on the detected intensity of the reflection light 116. The detector signal may be binary, indicating whether reflection light 116 was detected or not. Based on this information, the processor 120 may determine that no sample 104, 202 is present in the sample space 106 if the detector 118 has not detected any reflection light 116, and that a sample 104, 202 is present in the sample space 106 if the detector 118 has detected reflection light 116. The detector signal may also have multiple different values, each value corresponding to a different intensity of the detected reflection light 116. In such an embodiment, the processor 120 may determine that a sample 104, 202 is present in the sample space 106 if the intensity of the detected reflection light 116 is greater than a predetermined threshold. Likewise, the processor 120 may determine that no sample 104, 202 is present in the sample space 106 if the intensity of the detected reflection light 116 is less than or equal to a predetermined threshold. The processor 120 may take additional information into consideration when determining whether a sample 104, 202 is present in the sample space 106. For example, the processor 120 may take the spatial distribution of the reflection light 116 into account, determining that a sample 104, 202 is present in the sample space 106 only if the reflection light 116 has hit the detector 118 in a predetermined area.

In the optional step S308 the result of the determination whether or not a sample 104, 202 is present in the sample space 106 is stored together with a time information. The time information may be a time stamp comprising the current time and/or date. The time information may also contain a time since the start of an experiment performed using the microscope 102, 200. The results of the determinations together with the time information form a history from which it is possible to trace when a sample 104, 202 was present in the sample space 106. The steps S302 to S308 may be performed repeatedly or continuously to generate the history.

The steps S302 to S308 may also be repeated for different positions of the sample 104, 202 relative to the objective lens 110b, for example using the microscope stage 204 to move the sample 104, 202 between repetitions. In step S308, instead of or in addition to the time information, a position information may be stored for each repetition. Such an embodiment of the method may be used to determine for what positions the sample 104, 202 is in the sample space 106, i.e. the space immediately in front of the objective lens 110b, 206, for example.

In step S310 the microscope 102, 200 is controlled to perform or not perform an action. Whether or not the action is performed is determined may be based on a single result generated in step S306 and/or based on the history generated in step S308. In an example, the processor 120 causes the microscope 102, 200 to perform or not perform the action. For example, the processor 120 may cause the microscope 102, 200 to perform an automatic immersion using the automatic immersion system 108 only if it was determined that a sample 104, 202 is present in the sample space 106. Likewise, the processor 120 may cause the microscope 102, 200 to stop an automatic immersion once it is determined, that no sample 104, 202 is currently present in the sample space 106, for example because the sample 104, 202 has been manually removed.

The processor 120 may further cause the microscope stage 204 to stop moving in its current direction of movement if the processor 120 has determined that no sample 104, 202 is currently present in the sample space 106, since this means the microscope stage 204 has moved the sample 104, 202 out of the sample space 106. This prevents the user from moving the sample 104, 202 too far and prevents collisions. In a slightly modified example, the sample 104, 202 only comprises a single well 202c of the multiwell plate 202b and the specimen 202a arranged therein. The processor 120 determines based on the spatial distribution of the reflection light 116, for example, whether the well 202c of the multiwell plate 202b is inside the sample space 106. Once the well 202c is moved out of the sample space 106, the processor 120 determines that no sample 104, 202 is currently present in the sample space 106, and outputs a warning to the user by controlling the output unit 210.

In another example, the control device 100 controls the output unit 210 to output a corresponding warning to the user if the processor 120 has determined that no sample 104, 202 is present in the sample space 106, and the user tries to start an experiment by activating a laser, for example.

In another example, the processor 120 has determined on the basis of the history generated in step S308 that the sample 104, 202 has been moved since the beginning of an experiment. The processor 120 may warn the user that the current ROI may be different from the ROI at the start of the experiment by controlling the output unit 210. Alternatively, or additionally, the processor 120 may cause the microscope 102, 200 to redetermine certain imaging parameters, such as a focus map and/or an autofocus curve. Likewise, the processor 120 may cause the microscope 102, 200 to initiate the automatic correction of aberrations.

The processor 120 may also stop or pause a current experiment if the processor 120 has determined that the sample 104, 202 has been moved. For example, the processor 120 may cause the microscope 102, 200 to deactivate an illumination light source, such as a laser, and/or to stop an incubation. If an incubation has been stopped, the processor 120 may also prevent the microscope 102, 200 from starting another experiment until the processor 120 determines that a sample 104, 202 is now present in the sample space 106 and a predetermined time has passed since the incubation was restarted, allowing the incubation system to reach appropriate incubation values.

In another example, the processor 120 has determined that no sample 104, 202 is currently present in the sample space 106. The processor 120 may cause the microscope stage 204 to move to a loading position, enabling the user to provide a sample 104, 202 to the microscope 200.

In yet another example, the method is performed to check whether a user defined ROI comprises parts not on the sample carrier 104b. For that, steps S302 to S308 have been repeated for different positions of the sample 104, 202 relative to the objective lens 110b. The sample 104 was moved until the ROI was completely scanned. Based on the information generated in step S308 it is determined whether the sample 104has been moved out of the sample space 106 during the scanning of the ROI, which would mean that at least part of the ROI is not on the sample carrier 104b. The result of this determination is output to the user in step S310 by controlling the output unit 210.

Step S310 may further comprise steps of workflows performed at least in part by the microscope 102, 200. For example, the microscope 102, 200 performs part of a workflow that involves re-staining the sample 104, 202 after a predetermined time has passed. If the processor 120 determines that the sample 104, 202 is still present in the sample space 106 after the predetermined time has passed, the processor 120 may inform the user to perform the re-staining by controlling the output unit 210. Another exemplary workflow involves the imaging of tissue cuts distributed over multiple slides. Once the processor 120 determines that a sample 104, 202 has been removed from the sample space 106, the processor 120 may cause the microscope 102, 200 to start the necessary processes to create a stitched volume of the samples 104, 202. The history generated in step S308 may be used in these automated workflows to determine whether an action needs to be taken or not. For example, the sample 104, 202 was last moved 59 minutes ago. However, for the current process in the workflow it is only relevant if the sample 104, 202 was moved in the last 10 seconds. No special action needs to be taken because the sample 104, 202 was moved.

The process is then ended in step S312.

Identical or similarly acting elements are designated with the same reference signs in all Figures. As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### Reference signs

- 100: Control device
- 102: Microscope
- 104: Sample
- 104a: Specimen
- 104b: Sample carrier
- 106: Sample space
- 108: Automatic immersion system
- 110: Optical system
- 110a: Front surface
- 110b: Objective lens
- 112: Light source
- 114: Measurement light beam
- 116: Reflection light
- 118: Detector
- 120: Processor
- 120a: Memory element
- 122: Block
- 200: Microscope
- 200a: Door
- 202: Sample
- 202a: Specimen
- 202b: Multiwell plate
- 204: Microscope stage
- 206: Objective lens
- 208: Revolving nosepiece
- 210: Output unit
- O: Optical axis

## Claims

1. A control device (100) for a microscope (102, 200) comprising
a light source (112) configured to generate a measurement light beam (114);
an optical system (110) configured to direct the measurement light beam (114) into a sample space (106) of the microscope (102, 200), and to receive reflection light (116), which comprises light of the measurement light beam (114) reflected in the sample space (106);
a detector (118) configured to detect the intensity of the reflection light (116) received by the optical system (110); and
a processor (120) configured to determine whether or not a sample (104, 202) is present in the sample space (106) based on the intensity of the reflection light (116) detected by the detector (118), and to control the microscope (102, 200) to perform or not perform an action based on whether the processor (120) has determined that a sample (104, 202) is present in the sample space (106).

2. The control device (100) according to any one of the preceding claims, wherein the processor (120) is configured to control the microscope (102, 200) to perform at least one of the following actions only if the processor (120) has determined that a sample (104, 202) is present in the sample space (106): an immersion, an incubation, an illumination, determining a focus map, determining an autofocus curve, and capturing an overview image of the sample (104, 202).

3. The control device (100) according to any one of the preceding claims wherein the processor (120) is configured to control the light source (112) to generate the measurement light beam (114).

4. The control device (100) according to claim 3, wherein the processor (120) is configured to control the light source (112) to generate the measurement light beam (114) at a predetermined interval, and to determine whether or not a sample (104, 202) is present in the sample space (106) based on the reflection light (116) detected by the detector (118) each time.

5. The control device (100) according to claim 4, wherein the processor (120) comprises a memory element (120a) and is configured to store the result of each determination together with a time information on the memory element (120a).

6. The control device (100) according to claim 4 or 5, wherein the processor (120) is configured to control the microscope (102, 200) to perform at least one of the following actions only if the processor (120) has determined that a sample (104, 202) was removed from the sample space (106) and that a sample (104, 202) has been placed in the sample space (106) subsequently: output a warning to the user that the sample (104, 202) has been moved, initiate automatic correction of aberrations, redetermine a focus map, redetermine an autofocus curve, and output an information to the user.

7. The control device (100) according to any one of the preceding claims, wherein the processor (120) is configured to determine that a sample (104, 202) is present in the sample space (106) if the intensity of the reflection light (116) detected by the detector (118) is greater than a predetermined threshold, and to determine that no sample (104, 202) is present in the sample space (106) if the intensity of the reflection light (116) detected by the detector (118) is less than or equal to a predetermined threshold.

8. The control device (100) according to any one of the preceding claims, wherein the processor (120) is configured to determine that a sample (104, 202) is present in the sample space (106) if the detector (118) detects reflection light (116), and to determine that no sample (104, 202) is present in the sample space (106) if the detector (118) detects no reflection light (116).

9. The control device (100) according to any one of the preceding claims wherein the detector (118) is a non-imaging detector (118).

10. The control device (100) according to any one of the preceding claims wherein the optical system (110) comprises at least one objective of the microscope (102, 200).

11. The control device (100) according to any one of the preceding claims, wherein the light source (112), the optical system (110), and/or the detector (118) are part of a triangulating autofocus system of the microscope (102, 200).

12. The control device (100) according to any one of the preceding claims, wherein the processor (120) is configured to control the microscope (102, 200) to move an immersion objective (110b) into the optical axis O of the microscope (102, 200) only if the processor (120) has determined that a sample (104, 202) is present in the sample space (106).

13. The control device (100) according to any one of the preceding claims, wherein the processor (120) is configured to determine if an immersion objective (110b) is to be moved into the optical axis O of the microscope (102, 200), and to control an output unit (210) to output a warning to a user that no sample (104, 202) is present in the sample space (106) if the processor (120) has determined that no sample (104, 202) is present in the sample space (106).

14. The control device (100) according to claim 13, wherein the processor (120) is configured to determine if the immersion objective (110b) is to be moved into the optical axis O of the microscope (102, 200) based on a user input.

15. A microscope (102, 200) comprising a control device (100) according to any one of the preceding claims.

16. A method for controlling a microscope (102, 200), the method comprising
generating a measurement light beam (114);
directing the measurement light beam (114) into the sample space (106);
receiving reflection light (116), which comprises light of the measurement light beam (114) reflected in the sample space (106);
detecting the intensity of the reflection light (116);
determining whether or not a sample (104, 202) is present in the sample space (106) based on the intensity of the detected reflection light (116); and
controlling the microscope (102, 200) to perform or not perform an action based on whether the processor (120) has determined that a sample (104, 202) is present in the sample space (106).
